# EUROPEAN PATENT SPECIFICATION

(11) **EP 2 995 503 B1**
(45) Date of publication and mention of the grant of the patent: **03.01.2018**
(21) Application number: 15185049.2
(22) Date of filing: 14.09.2015
(51) Int. Cl.: B60R 9/055

(54) **A ROOF BOX**
DACHKOFFER
COFFRE DE TOIT

(30) Priority: 15.09.2014 IT MO20140258
(43) Date of publication of application: 16.03.2016
(73) Proprietor: F.LLI MENABO' S.R.L., 42025 Cavriago (Reggio Emilia) (IT)
(72) Inventor: SALSI, Andrea, 42011 Bagnolo in Piano, Reggio Emilia (IT); MENABO', Domenico, 42122 Reggio Emilia (IT)
(74) Representative: Gagliardelli, Fabrizio

(56) References cited:
- WO-A1-2014/043128
- DE-C1- 19 524 976
- US-A- 1 665 358
- US-A1- 2005 194 414
- US-A1- 2014 097 219

## Description

The invention has for an object a roof box (or "trunk"). Boxes are known for the carriage of luggage and items in general, which are intended to be mounted on the roof of a motor vehicle, in particular of a car, for example by means of typical roof bars.

Boxes of this kind define an isolated loading space, wherein the baggage can be housed and protected from wind and weather, dust and staining substances in general.

Further, owing to roof boxes, the luggage can be stowed on the vehicle in an easy and rapid manner, without the need to necessarily handle straps, cables or elastic nets, and the like.

Roof boxes include a tub-shaped base body and a cover for closing the base body, wherein said isolated space is defined.

One of the drawbacks exhibited by the roof boxes of the known type, is that its cover tends to open due to air resistance when the car is driven at high speed.

In order to obviate this drawback, roof boxes were realized which exhibit an aerodynamics conformation and different systems were devised for closing the cover on the base body.

However such measures turned out to be not fully resolutive for practical purposes.

DE19524976 discloses a roof box for a vehicle having an upper opening, provided at the back of the box, and lower opening, provided at a lower portion of the box, in an advanced position with respect to the upper opening.

Both the openings are protected against the rain by means of respective wedge covers.

Air recirculation inside the box is facilitate, exploiting the pressure difference produced between the two openings, during the run of the vehicle.

The technical task at the base of the present invention, is therefore to provide a roof box which overcomes the drawback exhibited by the prior art of unwanted opening of the cover.

The technical task mentioned is attained by the roof box realized according to claim 1.

Further characteristics and advantages of the present invention will become more apparent from the indicative, and therefore non-limiting, description of a preferred but non-exclusive embodiment of the roof box, as illustrated in the accompanying drawings wherein:
- Figure 1 is an axonometric view of the box of the invention;
- Figure 1a is an enlarged view of the particular K of the preceding figure.
- Figure 2 is an exploded axonometric view of a Venturi effect device included in the invention;
- Figure 3 is a bottom view of an external element comprised within the device of the preceding figure; and
- Figure 4 is an axonometric view of the external element of the preceding figure; and
- Figure 5 is a detail of a longitudinal sectional view of the roof box of the invention.

With reference to the above mentioned figures, by 1 it is indicated the roof box (or "trunk") according to the invention.

The box 1 herein provided, finds application within the field described in the discussion on the prior art and can therefore be mounted on the roof of motor vehicles for the carriage of luggage and items in general, e.g. by means of bars of the known type.

The box 1, which may exhibit an elongated shape, firstly comprises a bottom base body 11 and an upper cover 12 for closing the base body 11. Once the box 1 is closed, an isolated internal volume V, wherein the items can be housed, comes to be defined therein - i.e. therein contained and thus isolated from the outside of the box.

Accordingly, this volume is "empty", which means that it is suitable for receiving the items to be carried.

The base body 11 is generally tub-shaped and with an internal concave side, while the cover 12 exhibits a convex shape and is in turn provided with an internal concave side, which is substantially arch-shaped.

The base body 11 and the cover 12 may for example be made of plastic or any other materials suitable for the purpose.

In use, the box 1 is disposed axially to the vehicle, i.e., with the length thereof being parallel to the axis of the vehicle.

Therefore, the box 1 exhibits a front part 10 intended to be facing towards the front travel direction of the vehicle whereon it is fitted, and a rear opposite part.

During normal running of the vehicle, the box 1 is subject to air resistance, starting from the front side 10 or "face" of the box 1.

For the sake of brevity and simplicity, reference will be made to the aerodynamic effects of the known type produced relative to the box 1 herein provided during travel of the vehicle, as due to the fact that the box is crossing an air flow.

According to an important aspect of the invention, the box 1 includes at least one Venturi effect device 2 which is able to put the outside of the box in communication with said internal volume V, so as to produce a depression therein.

In other words, following the running of the vehicle, the Venturi effect device 2 (hereinafter the "Venturi device"), causes a decrease in pressure within the internal volume V of the box 1.

Prior to describing further constructive and functional aspects of the invention, it should be noted that, the fact that pressure is so decreased within the internal volume V such to result to be lower than the external pressure, allows to overcome the drawback in the prior art.

Indeed, even at high speed and therefore with a considerable air flow pressure being exerted on the cover 12 of the box 1, the depression that is created within the internal volume V develops a resistance to the opening of the cover 12, thereby making it possible to obviate aforementioned drawbacks.

It should be further appreciated that, advantageously, the decrease of pressure within the internal volume V of the box 1, is functional to the travelling speed.

Further advantages will be detailed within the description on how the present invention works.

The box 1 herein provided can be identified as a roof box also of the known type, to which the Venturi device 2 of the invention is coupled.

The Venturi device 2 is preferably mounted on the cover 12, for example relative to the axial plane of the box 1.

In detail, the Venturi device 2 can be placed centrally to the cover 12; preferably, it is placed at the major height area of the box itself.

Without prejudice to the generality of the foregoing, note that reference will be made hereinafter to the particular case wherein the Venturi device 2 and the components thereof are associated with the cover 12 in the manner explained below; however, alternative embodiments are also possible, wherein arrangement of the inventive device 2 can be other than the one herein described.

According to the preferred embodiment of the invention, the Venturi device 2 comprises at least a first conduit 20 with a variable section, arranged above the cover 12 and adapted to receive an air flow produced during the running of the vehicle.

The conduit is thus arranged at the outer surface of the cover 12 and is preferably oriented axially thereto (i.e. it exhibits a longitudinal parallel axis), so as to intercept said air flow effectively.

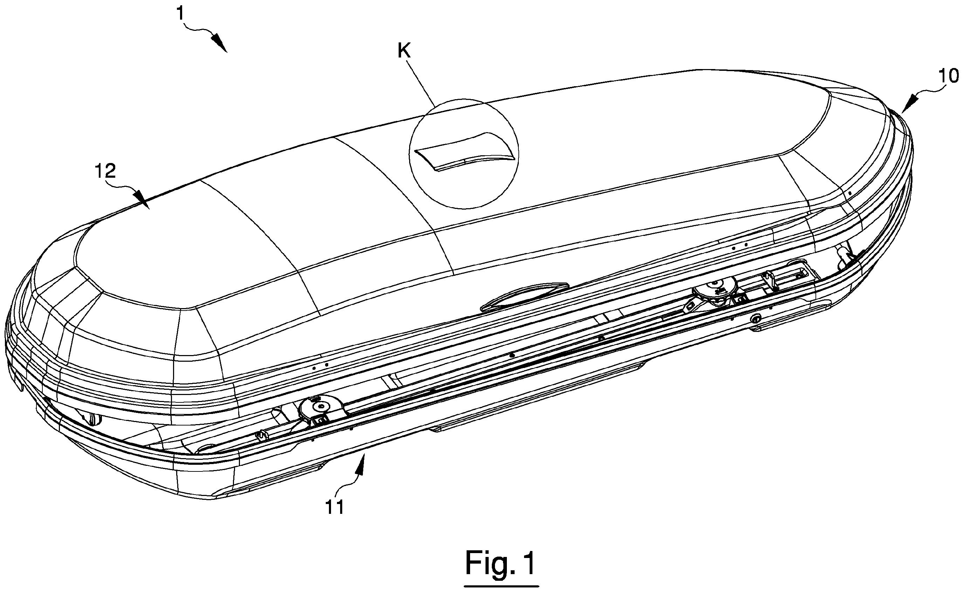

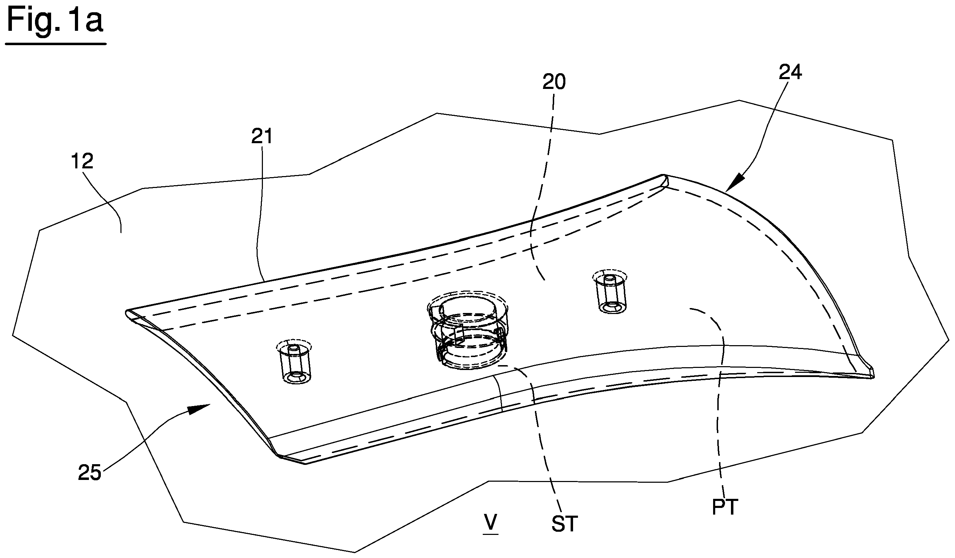

In detail, the Venturi device 2 may include an external elongated element 21, for example, a generally plate-like element, which is laterally provided with transversal sidewalls in contact with the external surface of the cover 12, so as to define therewith the first conduit 20 (see Figures 1 and 1a).

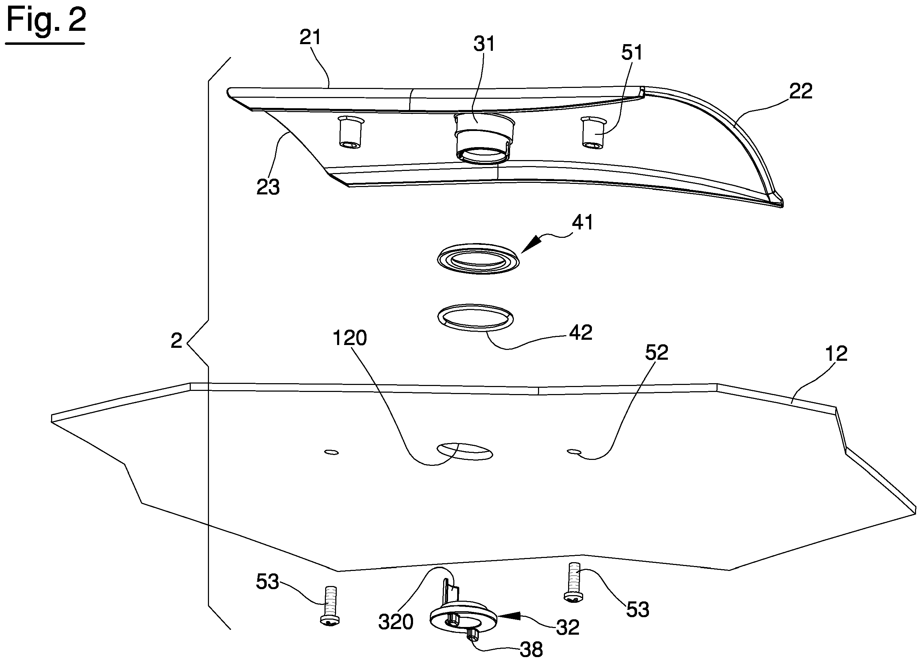

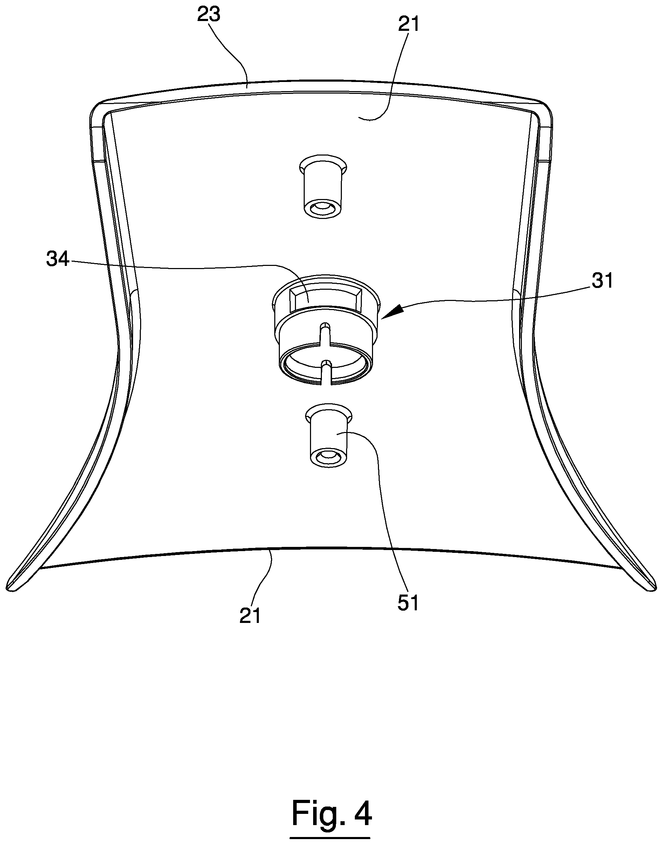

In other words, as particularly shown in Figures 2 and 4, the external element 21 may be tile-shaped, specifically it may appear at least partially arched in the transverse direction, thereby forming a convexity.

It should be appreciated that the external element 21 can be realized in a single piece, for example in plastic material.

The external element 21 may exhibit substantially C-shaped cross-sections due the presence of the longitudinal sidewalls protruding downwards and contacting the external surface of the cover 12 with the lower free edges thereof.

However, generally speaking, due to aerodynamic or aesthetic reasons, the internal section can be C-shaped, while the shape of the external surface, and thus its cross section profile, can be of a different type.

The aforementioned first conduit 20 (see Figure 1a), is defined between the upper surface of the cover 12, covered by the external element 21, the ceiling of said element 21 and its sidewalls forming the sides thereof. It goes without saying that the shape of the lower edge of the sidewalls depends on the development of the external surface of the cover 12; the conduit is preferably open at its longitudinal ends 24, 25 and closed laterally by the sidewalls of the external element 21.

Therefore, the conduit has an inlet 24 for the air flow and an outlet 25 opposite the inlet.

The external element 21 is preferably arranged with the length thereof disposed axially to the cover 12, so that the air flow may be effectively channeled into the first conduit 20.

The external element 21 has a shape tapered in width, at least along a portion of its longitudinal extension.

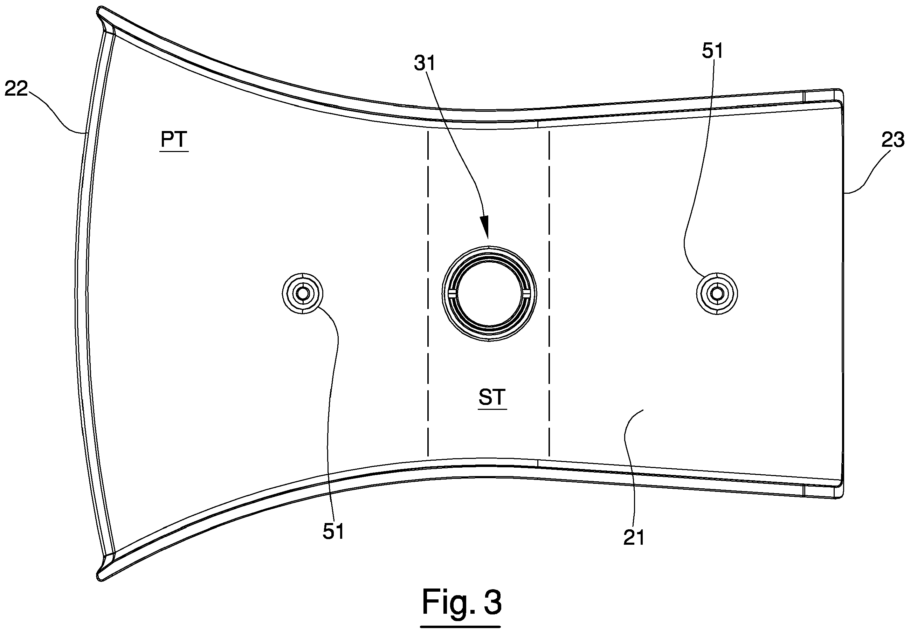

In practice, the width of such portion of the external element 21 decreases in a rear direction, i.e. in the direction of the back side of the box 1 (see figure 3).

The external element 21 preferably includes a first front end 22 (relative to the orientation of the box 1), wherein it exhibits the major width thereof, thereby defining a passage for the inlet of air flow.

From this front end 22, the width of the external element 21 becomes narrower at least along a longitudinal portion, substantially up to a median zone and it may possibly, but not necessarily, widen along a next portion which comprises the rear end 23.

Alternatively or, as preferable, in addition to the above described shape of the upper element, the reduced section portion ST of the first conduit 20 may be defined by the presence of an obstructive element 31, whose additional features are more fully described here below, which obstructive element 31 is placed internally the first conduit 20, thereby defining a reduced light portion.

By virtue of the arrangements explained above, or more generally in accordance with the several configurations of the inventive Venturi device 2, the above-mentioned first conduit 20 includes at least one longitudinal portion with reduced cross-section ST, thereby defining a narrowing for the passage of the channeled air flow.

It should be appreciated that this reduced section portion ST may exhibit a variable and non-constant section, and that in other words, it is a longitudinal portion along which the amplitude of the light of the conduit decreases.

Upstream of this reduced section portion ST (or second portion), the conduit includes a portion with a larger section PT (or first portion), with a funnel-like development preferably tapered inwardly.

In this context, the term "upstream" is defined in relation to the air flow direction.

By the term "reduced section portion ST" herein utilized, it is meant that the section of this portion is smaller than that of a different portion of the conduit and vice versa with reference to the portion with larger section PT. In particular, the second portion ST is narrower than the first portion PT arranged upstream.

Such length portions of the first conduit 20 do not necessarily exhibit a different thickness, i.e., the vertical dimensions thereof may not differ significantly from one another.

Alternatively, the second portion ST may be thinner.

In the preferred case wherein the configuration of the conduit mentioned above is defined at least partially by the shape of the external element 21, the first and second PT, ST portions can be positioned relative thereto, as shown schematically in Figure 3.

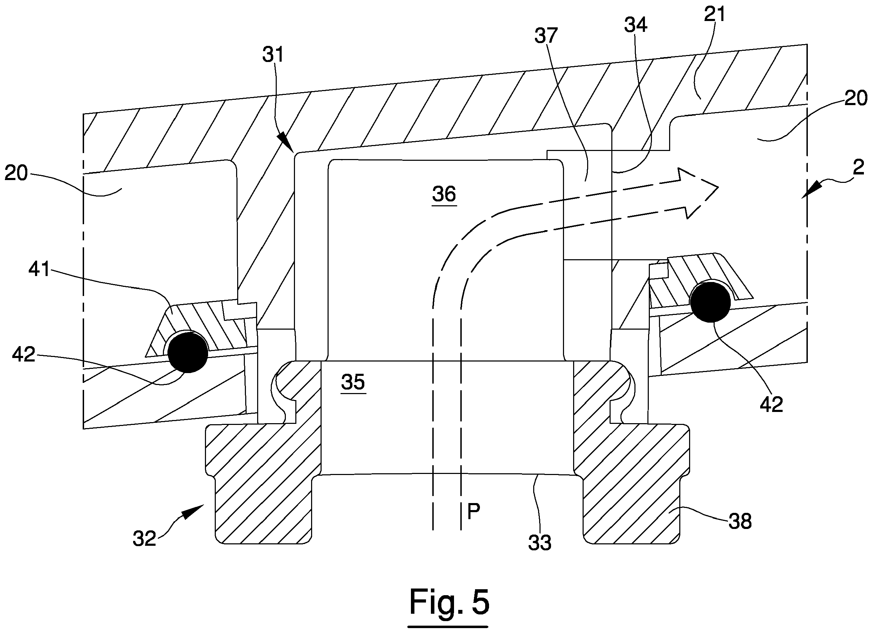

Therefore, in use, the air flow enters into the front inlet 24 of the conduit by passing beyond the front end 22 of the external element 21, said air flow runs along the larger first portion PT and finally reaches the second ST portion, which is the one with a reduced section, wherein air flow is accelerated and pressure decreased due to the known Venturi effect. Advantageously, as seen in Figure 5, the Venturi device 2 of the invention includes a communication path P between the internal volume V of the box 1 and a suction portion of the first conduit 20 which includes (or corresponds) to the already mentioned reduced section portion ST.

Therefore, the path P starts from inside the box 1 (i.e. from the inner side of the cover 12), and then reaches the portion of the Venturi device 2 where pressure's decrease is generated.

As a result, the air that is located within the internal volume V of the box 1 is sucked in through the communication path P and caused to flow out of the box 1.

Then, the air flows outside, through the rear inlet 25 of the first conduit 20 by passing through the rear end 23 of the external element 21.

It should be appreciated that air suction from the inside of the box 1, may also help to decrease internal temperature.

This is a further advantage resulting from use of the proposed solution, since it is known that roof boxes of this type are often used in the summer time for holiday travels and thus directly exposed to solar radiation.

According to a preferred aspect of the invention, the Venturi device 2 includes an internal element 31, 32, comprising a second conduit 35, 36, 37, wherein said communication path P is defined, which extends between a first inlet 33 located within said internal volume V, and a second inlet 34 arranged in said suction portion (see Figure 5).

This internal element 31, 32 is placed relative to a through hole 120 formed on the cover 12 of the box 1 (see figure 2).

In detail, this internal element 31, 32 may comprise a first member 31, which is preferably a sleeve closed at the top and open at the bottom thereof, and realized, by way of example, in a single piece with the external element 21, which may identify aforementioned obstructive element that helps to decrease reduction in the amount of light of the main conduit (see Figures 2 and 3).

In detail, the second inlet 34 of the second conduit may be defined by a through hole 37 formed transversely to the walls of the first member 31.

Preferably, such a through hole 37 is facing toward the rear of the Venturi device 2 (and therefore of the box 1), i.e., towards the outlet 25 of the first conduit 20 (as shown in Figures 4 and 5).

Even more in detail, the aforementioned second inlet 34 may be located in the reduced section portion ST of the first conduit 20, or also downstream thereof, where pressure is however lower than that in the larger section portion located upstream.

Thus, when the vehicle that mounts the roof box 1 of the invention is in motion, the air contained in the internal volume V is sucked in via the second conduit 35, 36, 37, thus flowing along the communication path P which leads towards the outlet 25 of the first conduit 20, i.e., outwardly of the Venturi device 2.

According to an optional aspect of the invention, a second member 32 can be associated to the first member 31, for example via a rotatable coupling, according to the configuration shown in Figure 5.

Such second member 32 is provided for allowing alternately opening and obstruction of the communication path P between the internal volume V and the first conduit 20, on user's command.

To be precise, the second member 32 may conform a shutter 320, shown in Figure 2 as a wall with cylindrical development, which is so dimensioned as to be able to completely close the through hole of the first member 31; the shutter 320 is further suitable for being moved, by way of example, along a cylindrical surface, so as to allow passage of air.

In this manner, the user may decide whether to operate the depression effect of the inventive device 2, if need be.

To this end, there may be provided prongs 38 being inferiorly formed in the second member 32 and easily accessible when the cover 12 is open.

The second member 32 has preferably a through hole 35 which is coaxial, or otherwise in communication with the internal space 36 of the first member 31.

In this case, the above-mentioned first inlet 33 of the second conduit 35, 36, 37 is defined by the through hole of the second member 32. In order to ensure the seal between the internal element 31, 32 and the hole 120 formed on the cover 12, suitable sealing means may be provided, which are for example realized by means of a ring 41 provided with an annular seat so as to accommodate an O-ring 42, which is so positioned as to circumscribe the internal element 31, 32, preferably on the upper side of the cover 12.

Removable fastening means, such as screw means, may be provided for easy assembly (and disassembly) of the Venturi device 2 herein described.

In detail, aforesaid external element 21 may conform inferiorly one or more tangs 51 being internally threaded and arranged coaxial to small through holes 52 formed within the cover 12, wherein fixing screws 53 can be inserted, as shown by way of example in Figure 2.

## Claims

1. A roof box (1) for a motor vehicle, comprising a base body (11) and a cover (12) for closing the base body (11), thereby defining an internal volume (V) that can contain items, **characterised in that** it comprises at least one Venturi effect device (2) being able to put the outside of the box (1) into communication with said internal volume (V), so as to produce a depression therein.

2. The box (1) according to the preceding claim, wherein said Venturi effect device (2) is provided on the cover (12).

3. The box (1) according to at least one of the preceding claims, wherein the device (2) comprises at least a first conduit (20) with a variable section, arranged at the external surface of the box (1), able to receive an air flow produced by the travel of the vehicle.

4. The box (1) according to the preceding claim, wherein said first conduit (20) includes at least one portion with a reduced section (ST).

5. The box (1) according to the preceding claim, wherein said first conduit (20) includes a portion with a larger section (PT), arranged upstream of said portion with a reduced section (ST) with respect to said air flow.

6. The box (1) according to at least one of claims 3 to 5, wherein said device (2) includes an external elongated element (21), laterally provided with transversal sidewalls in contact with the external surface of the cover (12) or of the base body (11), so as to define therewith said first conduit (20).

7. The box (1) according to at least one of claims 4 to 6, wherein said device (2) includes a communication path (P) between said internal volume (V) and a suction portion of the first conduit (20) that includes said reduced section portion (ST).

8. The box (1) according to the preceding claim, wherein said device (2) includes an internal element (31, 32), comprising a second conduit (35, 36, 37) wherein said communication path (P) is defined, the second conduit (35, 36, 37) extending between a first inlet (33) placed in said internal volume (V) and a second inlet (34) arranged in said suction portion.

9. The box (1) according to the preceding claim, wherein said second inlet (34) of the second conduit (35, 36, 37) faces an outlet (25) of the first conduit (20).

10. The box (1) according to claim 8 or claim 9, wherein the internal element (31, 32) comprises a first member (31), realized in a single piece with said external element (21), the first member (31) being open at the bottom and being provided with a through hole that defines said second inlet (34).

## Patentansprüche

1. Dachkoffer (1) für ein Motorfahrzeug, umfassend einen Basiskörper (11) und eine Abdeckung (12) zum Verschließen des Basiskörpers (11), hierdurch definierend ein internes Volumen (V), das Artikel enthalten kann, **dadurch gekennzeichnet, dass** er mindestens eine Venturi-Effekt-Vorrichtung (2) umfasst, die in der Lage ist, die Außenseite des Koffers (1) mit dem internen Volumen (V) in Kommunikation zu bringen, sodass ein Unterdruck darin erzeugt wird.

2. Koffer (1) nach dem vorhergehenden Anspruch, wobei die Venturi-Effekt-Vorrichtung (2) auf der Abdeckung (12) bereitgestellt ist.

3. Koffer (1) nach mindestens einem der vorhergehenden Ansprüche, wobei die Vorrichtung (2) mindestens eine erste Leitung (20) mit einem variablen Querschnitt umfasst, angeordnet an der außenseitigen Oberfläche des Koffers (1), in der Lage, eine Luftströmung aufzunehmen, die durch die Fahrt des Fahrzeugs erzeugt wird.

4. Koffer (1) nach dem vorhergehenden Anspruch, wobei die erste Leitung (20) mindestens einen Abschnitt mit einem reduzierten Querschnitt (ST) einschließt.

5. Koffer (1) nach dem vorhergehenden Anspruch, wobei die erste Leitung (20) einen Abschnitt mit einem breiteren Querschnitt (PT) einschließt, angeordnet vor dem Abschnitt mit einem reduzierten Querschnitt (ST) gegenüber zur Luftströmung.

6. Koffer (1) nach mindestens einem der Ansprüche 3 bis 5, wobei die Vorrichtung (2) eine außenseitiges verlängertes Element (21) einschließt, seitlich versehen mit quer angeordneten Seitenwänden in Kontakt mit der außenseitigen Oberfläche der Abdeckung (12) oder des Basiskörpers (11), sodass damit die erste Leitung (20) definiert wird.

7. Koffer (1) nach mindestens einem der Ansprüche 4 bis 6, wobei die Vorrichtung (2) einen Kommunikationsweg (P) zwischen dem internen Volumen (V) und einem Saugabschnitt der ersten Leitung (20) einschließt, der den reduzierten Querschnittsabschnitt (ST) einschließt.

8. Koffer (1) nach dem vorhergehenden Anspruch, wobei die Vorrichtung (2) ein internes Element (31, 32) einschließt, umfassend eine zweite Leitung (35, 36, 37), in dem der Kommunikationsweg (P) definiert ist, wobei sich die zweite Leitung (35, 36, 37) zwischen einem ersten Einlass (33), platziert im internen Volumen (V), und einem zweiten Einlass (34), angeordnet im Saugabschnitt, erstreckt.

9. Koffer (1) nach dem vorhergehenden Anspruch, wobei der zweite Einlass (34) der zweiten Leitung (35, 36, 37) einem Auslass (25) der ersten Leitung (20) zugewandt ist.

10. Koffer (1) nach Anspruch 8 oder Anspruch 9, wobei das interne Element (31, 32) ein erstes Glied (31) umfasst, gefertigt in einem Stück mit dem externen Element (21), wobei das erste Glied (31) an der Unterseite offen und mit einer Durchführungsöffnung versehen ist, die den zweiten Einlass (34) definiert.

## Revendications

1. Coffre de toit (1) pour un véhicule motorisé, comprenant un corps de base (11) et un couvercle (12) pour fermer le corps de base (11), définissant ainsi un volume interne (V) pouvant contenir des articles, **caractérisé en ce qu'**il comprend au moins un dispositif à effet Venturi (2) pouvant mettre l'extérieur du coffre (1) en communication avec ledit volume interne (V) de manière à créer une dépression en son sein.

2. Coffre (1) selon la revendication précédente, dans lequel ledit dispositif à effet Venturi (2) est prévu sur le couvercle (12).

3. Coffre (1) selon au moins une des revendications précédentes, dans lequel le dispositif (2) comprend au moins un premier conduit (20) à section variable, disposé en correspondance de la surface externe du coffre (1), pouvant recevoir un flux d'air produit par le déplacement du véhicule.

4. Coffre (1) selon la revendication précédente, dans lequel ledit premier conduit (20) inclut au moins une partie à section réduite (ST).

5. Coffre (1) selon la revendication précédente, dans lequel ledit premier conduit (20) inclut une première partie à section plus grande (PT) disposée en amont de ladite partie à section réduite (ST) par rapport au dit flux d'air.

6. Coffre (1) selon au moins une des revendications de 3 à 5, dans lequel ledit dispositif (2) inclut un élément allongé externe (21), pourvu latéralement de cloisons latérales transversales en contact avec la surface externe du couvercle (12) ou du corps de base (11) de manière à définir avec celui-ci ledit premier conduit (20).

7. Coffre (1) selon au moins une des revendications de 4 à 6, dans lequel ledit dispositif (2) inclut un chemin de communication (P) entre ledit volume interne (V) et une partie d'aspiration du premier conduit (20) incluant ladite partie à section réduite (ST).

8. Coffre (1) selon la revendication précédente, dans lequel ledit dispositif (2) inclut un élément interne (31, 32), comprenant un second conduit (35, 36, 37) dans lequel est défini ledit chemin de communication (P), le second conduit (35, 36, 37) se développant entre une première entrée (33) placée dans ledit volume interne (V) et une seconde entrée (34) disposée dans ladite partie d'aspiration.

9. Coffre (1) selon la revendication précédente, dans lequel ladite seconde entrée (34) du second conduit (35, 36, 37) fait face à une sortie (25) du premier conduit (20).

10. Coffre (1) selon les revendications 8 ou 9, dans lequel l'élément interne (31, 32) comprend un premier organe (31), réalisé en un seul tenant avec ledit élément externe (21), le premier organe (31) étant ouvert à la base et étant pourvu d'un trou passant définissant ladite seconde entrée (34).
